# EUROPÄISCHE PATENTSCHRIFT

(11) **EP 1 947 008 B1**
(45) Veröffentlichungstag und Bekanntmachung des Hinweises auf die Patenterteilung: **02.11.2011**
(21) Anmeldenummer: 08000782.6
(22) Anmeldetag: 16.01.2008
(51) Int. Cl.: B64D 41/00

(54) **Verfahren zur Energieversorgung eines Luftfahrzeuges**
Power supply method for an aircraft
Procédé d'alimentation en énergie d'un aéronef

(30) Priorität: 16.01.2007 DE 102007002283; 16.04.2007 DE 102007017820
(43) Veröffentlichungstag der Anmeldung: 23.07.2008
(60) Teilanmeldung: 09012407.4
(73) Patentinhaber: Liebherr-Aerospace Lindenberg GmbH, 88161 Lindenberg/Allgäu (DE)
(72) Erfinder: Metzler, Dirk, 88179 Oberreute (DE); Ludwig, Matthias, 88161 Lindenberg (DE); Cremer, Ralf, 88131 Lindau (DE); Herzog, Jacques, 88171 Simmerberg (DE); Ried, Georg, 88175 Scheidegg (DE)
(74) Vertreter: Herrmann, Uwe

(56) Entgegenhaltungen:
- WO-A-01/34424
- DE-A1-102005 010 399
- US-A1- 2003 075 643

## Beschreibung

Die vorliegende Erfindung betrifft ein Verfahren zur Energieversorgung eines Luftfahrzeuges mit einer normalen Energieversorgung, einer Not-Energieversorgung, die wenigstens eine Brennstoffzelle aufweist, und mit einem oder mehreren Verbrauchern, der oder die im Normalbetrieb durch die normale Energieversogung versogt werden.

Aus dem Stand der Technik ist es bekannt, zur Not-Energieversorgung eine RAM Air Turbine einzusetzen, deren Welle eine hydraulische Pumpe antreibt, wodurch im Notbetrieb eine ausreichende hydraulische Versorgung gewährleistet wird. Auch ist es möglich, mittels der RAM Air Turbine unmittelbar oder mittelbar über eine hydraulische Pumpe und einen Hydromotor einen Generator anzutreiben, um eine ausreichende Notstromversorgung sicher zu stellen.

Aus dem Stand der Technik ist es ferner bekannt, eine RAM Air Turbine durch ein Brennstoffzellensystem zu substituieren. Eine solche Vorgehensweise ist aus der DE 10 2005 010 399 A1 bekannt, bei der die RAM Air Turbine durch eine Brennstoffzelle ersetzt ist, die über eine Leistungsverteilungseinheit mit einem DC/DC-Wandler und mit einem DC/AC-Wandler in Verbindung steht. Über den DC/DC-Wandler wird eine elektrische Motorpumpe zur Hydraulikversorgung versorgt. Über den DC/AC-Wandler kann elektrische Energie ins Bordnetz eingespeist werden. Bei einer Energieunterversorgung wird das Brennstoffzellensystem durch die genannte Leistungsverteilungseinheit automatisch aktiviert.

Der Ersatz einer RAM Air Turbine durch eine Brennstoffzelle ist darüber hinaus aus der DE 198 21 952 C2 bekannt. Aus dieser Druckschrift geht hervor, dass der in der Brennstoffzelle produzierte Gleichstrom mittels Umrichter in Wechselstrom mit der im Flugzeug üblicherweise verwendeten Spannungsanlage gewandelt wird und sodann eine Hydraulikpumpe und/oder eine Bordstromanlage mit Energie versorgt.

Aus der US 2003/0075643A1 ist ein Flugzeug bekannt, dessen Propeller durch einen Elektromotor angetrieben wird; die Stromversorgung erfolgt mittels einer Brennstoffzelle. Bei hoher Last wird die Stromversorgung durch einen Energiespeicher unterstützt.

Bei einem Ausfall oder bei einer Störung der Energieversorgung eines Flugzeuges besteht die Notwendigkeit, die Notenergieversorgung möglichst rasch bereit zu stellen, um möglichst nahtlos den Notbetrieb ermöglichen zu können. Es ist daher die Aufgabe der vorliegenden Erfindung, ein Verfahren der eingangs genannten Art dahingehend weiterzubilden, dass dieses zuverlässig und mit einer geringen Startzeit arbeitet.

Diese Aufgabe wird durch ein Verfahren mit den Merkmalen des Anspruchs 1 gelöst. Danach ist ein aktiver Energiespeicher vorgesehen, der den oder die Verbraucher wenigstens zeitweise mit Energie versorgt . Ein wesentliches Merkmal der vorliegenden Erfindung besteht somit in der Anordnung eines aktiven Energiespeichers, worunter ein Energiespeicher zu verstehen ist, der im Normalbetrieb des Flugzeuges geladen ist, das heißt im Bedarfsfall sofort zur Verfügung steht. Auf diese Weise ist es erfindungsgemäß möglich, eine unterbrechungsfreie Stromversorgung im Notbetrieb zu gewährleisten. Der aktive Energiespeicher stellt Energie zumindest solange zur Verfügung, bis die Brennstoffzelle ihre Startphase abgeschlossen hat und somit ebenfalls zur Energieversorgung zur Verfügung steht. Erfindungsgemäß kann somit durch die Not-Energieversorgung beispielsweise die Leistungsausgänge "essential power", das heißt die Stromversorgung für die im Notbetrieb erforderlichen Komponenten, wie beispielsweise eine Bordelektronik, sowie "primary flight control power", das heißt die Hydraulikversorgung im Notbetrieb auch während der Startphase der Brennstoffzelle mit Energie versorgt werden. Eine Flugzeugbatterie kann dadurch eingespart bzw. verkleinert ausgeführt werden.

Der Begriff "Verbraucher" ist weit auszulegen und kann jede beliebige Komponente umfassen, die eine Energieversorgung erfordert. Beispiele können ein oder mehrere Elektromotoren zum Antrieb einer Pumpe für die Hydraulikversorgung oder auch Komponenten der Bordelektronik sein, die im Notbetrieb mit Strom versorgt werden müssen.

Der Energiespeicher kann mit der normalen Energieversorgung derart in Verbindung stehen, dass dieser von der normalen Energieversorgung aufgeladen wird und/oder derart, dass der Energiespeicher bei Bedarf Energie in die normale Energieversorgung einspeist.

Entsprechendes kann auch für die Verbindung zwischen Energiespeicher und Notstromnetz gelten. Auch hier kann ein undirektionaler Energiefluß vom oder zum Energiespeicher oder eine bidirektionale Verbindung zwischen Energiespeicher und Notstromnetz bestehen. Der Energiespeicher kann somit auch zur Netzdämpfung des Notstromnetzes dienen.

In bevorzugter Ausgestaltung der Erfindung ist vorgesehen, dass dem Energiespeicher ein Wandler, vorzugsweise ein bidirektionaler Wandler, vorgeschaltet ist, der vorzugsweise mit der normalen Energieversorgung des Flugzeuges in Verbindung steht und über den der Energiespeicher im Normalbetrieb des Flugzeuges geladen wird. In dieser Ausführungsform der Erfindung ist der aktive Energiespeicher im Normalbetrieb des Flugzeuges vorzugsweise vor Beginn oder während der Flug-mission von der Energieversorgung des Flugzeuges über den Wandler vorgeladen. Der Wandler kann beispielsweise als DC/DC-Wandler ausgeführt sein.

Durch den erfindungsgemäßen Einsatz eines aktiven Energiespeichers werden die Anforderungen der unterbrechungsfreien Energieversorgung des Flugzeuges und das Schaltverhalten der Brennstoffzelle entkoppelt. Daraus ergibt sich der Vorteil, dass beide Subsysteme (Energiespeicher, Brennstoffzelle) in ihrem jeweils optimalen Betriebspunkt betrieben werden können. Die hohe Startzeitanforderung einer Brennstoffzelle (< 1 Sekunde auf nominal Power) wird deutlich entspannt, was einen positiven Einfluß auf das Systemdesign hat.

Ein weiterer Vorteil der Erfindung besteht darin, dass ein kontinuierlicher Funktionstest der einzelnen Komponenten weitestgehend möglich ist. Die verbleibenden Komponenten können durch einen geeigneten Funktionstest (BITE) überwacht werden, ohne die Funktion der Notversorgung zu beschränken. Diese Maßnahme ist von Bedeutung, um die geforderte rechnerische Zuverlässigkeit zu ermöglichen und die Schlafzeiten in der Fehlerberechnung zu eliminieren. Ein solches aktives Monitoring ist zum Erreichen der Zulässigkeitsanforderungen von Vorteil.

In weiterer Ausgestaltung der Erfindung umfasst die Not-Energieversorgung einen bidirektionalen Wandler, der derart ausgeführt ist, dass dieser einen Energiefluß von dem Energiespeicher oder einer sonstigen Energiequelle zu der normalen Energieversorgung des Flugzeuges ermöglicht. Durch Verwendung eines derartigen bidirektionalen Wandlers ist es möglich, den "normal supply", das heißt die normale Bord-Energieversorgung des Flugzeuges durch den Energiespeicher oder sonstige in der Notversorgung vorhandene Energie (z. B. Schwungmassen) zu stützen. Dies kann weitere Vorteile auf der Flugzeugebene haben, wie z. B. die Einsparung von Umrichtern oder Batterien.

Weiterhin kann ein Wandler, vorzugsweise ein bidirektionaler Wandler vorgesehen sein, der derart ausgeführt ist, dass dieser einen Energiefluß von dem Energiespeicher oder einer sonstigen Energiequelle zu der Notstromversorgung des Flugzeuges und/oder von der Notstromversorgung des Flugzeuges zum Energiespeicher oder einer sonstigen Energiequelle ermöglicht.

In weiterer Ausgestaltung der Erfindung ist vorgesehen, dass es sich bei dem Energiespeicher um einen Superkondensator handelt.

Gemäß einer weiteren Ausgestaltung der Erfindung umfasst die Not-Energieversorgung einen Multikonverter, der Leistungselektronik-Komponenten der Elemente die Not-Energieversorgung enthält. Der Multikonverter kann beispielsweise alle Leistungselektronik-Komponenten der hier betrachteten Architektur zur Notversorgung des Luftfahrzeuges (DC/DC-Wandler, Step-Up oder Step-Down (optional bidirektional)), Energiespeicher (Superkondensator), Umrichter für Notstrom, etc. umfassen, die alle zusammen in einem Gehäuse angeordnet sein können.

Dabei kann vorgesehen sein, dass die Leistungselektronik-Komponenten als austauschbare Module oder als integrierte Baugruppen ausgeführt sind. Dadurch kann eine Optimierung der MTBF, Zuverlässigkeit und In-Service-Zuverlässigkeit erreicht werden. Gleiches gilt für die Steuerungskomponenten der hier betrachteten Notversorgung.

Die Module können auch als integrierte oder dezentrale Einheiten vorgesehen sein.

Die Brennstoffzelle kann an den genannten Multikonverter auf galvanischem, elektronischem oder magnetischem Wege angebunden sein.

In weiterer Ausgestaltung der Erfindung ist wenigstens eine elektrische Motorpumpe zur Hydraulikversorgung vorgesehen, deren Antriebseinheit wenigstens zwei Elektromotoren umfaßt, die mit unterschiedlichen Energiequellen in Verbindung stehen oder verbindbar sind. Eine weitere Architekturvariante ist somit das Konzept einer "Hybrid EMP (EMP = elektrische Motorpumpe) zur Hydraulikversorgung. Die Antriebseinheit der Pumpe besteht aus zwei unabhängigen Elektromotoren, die von verschiedenen Energiequellen versorgt werden und eine gemeinsame Hydraulikpumpe antreiben.

Die Kopplung der beiden Antriebssysteme kann beispielsweise über eine gemeinsame Motorwelle oder über ein differentiales Getriebe erfolgen. Somit ist eine weitestgehende Entkopplung der beiden Antriebsstränge gewährleistet, wodurch das Sicherheitsrisiko einer direkten elektrischen Kopplung beider Stromversorgungen beseitigt ist.

Denkbar ist, dass wenigstens einer der Elektromotoren derart angeordnet ist, dass er im Normalbetrieb des Luftfahrzeuges von der normalen Bord-Energieversorgung des Luftfahrzeuges mit Energie versorgt wird. Denkbar ist weiter, dass wenigstens einer der Elektromotoren derart angeordnet ist, dass er im Notbetrieb des Luftfahrzeuges von der Brennstoffzelle bzw. dem aktiven Energiespeicher mit Energie versorgt wird. Werden für die wenigstens zwei Elektromotoren unterschiedliche Motortypen verwendet (beispielsweise ein AC-Motor, der direkt vom Flugzeugnetz gespeist wird, und ein durch einen Umrichter gespeister Motor, der über die Brennstoffzelle oder den Energiespeicher mit Energie versorgt wird), ist das EMP-Design dissimilar, was Vorteile für die Fehlerbetrachtung hat.

Wie bereits oben ausgeführt, kann eine Steuereinrichtung vorgesehen sein, die den Energiespeicher derart ansteuert, dass dieser wenigstens solange Energie einspeist bzw. an die Verbraucher liefert, bis die Brennstoffzelle zur Energieversorgung zur Verfügung steht. In diesem Fall übernimmt der Energiespeicher somit wenigstens solange die Energieversorgung, solange die Brennstoffzelle sich noch in ihrer Startphase befindet.

Des Weiteren kann ein Kühlsystem zur Kühlung von Komponenten des Flugzeuges bzw. des Energieversorgungssystems vorgesehen sein. Dabei ist vorgesehen, dass die Brennstoffzelle zum Zwecke der Einstellung einer geeigneten Betriebstemperatur der Brennstoffzelle mit diesem Kühlsystem in Verbindung steht. Erfindungsgemäß ist somit vorgesehen, dass zum Zwecke der Begrenzung von Gewicht und Komplexität und zur Erhöhung der Zuverlässigkeit das Brennstoffzellensystem für seine Kühlung einen Teil eines Kühlkreislaufs eines anderen, vorzugsweise flüssigkeitgekühlten Systems mitbenutzt. Dabei ist vorzugsweise jedoch nicht zwingend vorgesehen, dass dieses andere System im Notfall nicht gebraucht wird.

Denkbar ist beispielsweise, dass das Flüssigkeitskühlsystem zur Kühlung von z. B. Elektronikkomponenten, die im Notbetrieb nicht genutzt werden, da sie für eine sichere Landung unkritisch sind, benutzt wird, um die Brennstoffzelle zu kühlen. Dies setzt voraus, dass dasselbe Kühlmedium für beide System eingesetzt werden kann.

Ein Vorteil dieser Architektur ist es, dass zahlreiche Komponenten gemeinsam genutzt werden können, wie beispielsweise Kühlflüssigkeitspumpen, Wärmetauscher, Rohrleitungen, Stauluftkanäle und eventuell auch Ventile.

Bei dem Wärmetauscher kann es sich beispielsweise um einen gemeinsam genutzten Haut-Wärmetauscher oder auch um einen gemeinsam genutzten in einen Stauluftkanal integrierten Wärmetauscher handeln.

Andere Systeme weisen dem gegenüber verschiedene Nachteile auf. Wird beispielsweise ein eigener Stauluftkanal für das Brennstoffzellen-Notenergiesystem vorgesehen, in dem ein Wärmetauscher angeordnet ist, ergeben sich als Nachteile eine erhöhte Komplexität und Gewicht, da ein zusätzlicher Stauluftkanal am Flugzeug vorgesehen werden muss sowie die fehlende Möglichkeit, das Kühlsystem zu monitoren. Wird ein Wärmetauscher mit Gebläse innerhalb des Rumpfes integriert, wird die Systemabwärme an die Luft innerhalb des Rumpfes angegeben. Ein Nachteil dieser Lösung besteht in der Größe des Wärmetauschers und der Problematik, dass der Wärmetauscher in geschlossener Umgebung betrieben werden muss, wodurch es zu einem Lufttemperaturanstieg innerhalb des Rumpfes kommen kann. Weitere Nachteile sind ein vergleichsweise hohes Gewicht sowie die fehlende Möglichkeit des Monitoring des Kühlsystems.

Ein Vorteil des gennanten Kühlsystems besteht darin, dass die Startzeit der Brennstoffzelle reduziert werden kann. Aufgrund der durch die zu kühlenden Komponenten, (wie beispielsweise Komponenten der Elektronik) erwärmten Flüssigkeit wird im Flugzeugnormalbetrieb der Brennstoffzellen-Stack auf einer bestimmten Temperatur gehalten, was vorteilhaft für die Startzeit des Systems ist, denn die Temperatur der Brennstoffzelle ist für deren Startzeit entscheidend. Dies wird beispielsweise dadurch möglich, dass ein nicht ganz geschlossenes Ventil bzw. ein nicht ganz dicht schließendes Ventil vorgesehen ist, mittels dessen die Brennstoffzelle über ein geeignetes Kühlmedium auf einem bestimmten Temperaturniveau gehalten werden kann.

Ein weiterer Vorteil des Systems besteht in einer erhöhten Zuverlässigkeit. Dadurch dass die Pumpe, die eventuell redundant und parallel ausgeführt sein kann, und die Wärmetauscher im Flugzeugnormalbetrieb betrieben werden, erübrigt sich die Unsicherheit der Dormancies für die geteilten, das heißt die gemeinsam verwendeten Komponenten.

Ein weiterer Vorteil besteht in dem geringeren Gewicht, da zahlreiche Komponenten, wie ausgeführt, sowohl für die Kühlung der anderen Komponenten als auch für die des Brennstoffzellen-Stacks verwendet werden können und somit zwei Systeme bedienen.

Weitere Einzelheiten und Vorteile der Erfindung werden anhand eines in der Zeichnung dargestellten Ausführungsbeispiels näher erläutert. Es zeigen:
- Figur 1:: eine schematische Darstellung des brennstoffzellenbasierten Notstromsystems gemäß der Erfindung,
- Figur 2:: eine weitere schematische Darstellung des brennstoffzellenbasierten Notstromsystem gemäß der Erfindung,
- Figur 3:: eine schematische Darstellung des Kühlsystems der Not-Energieversorgung des erfindungsgemäßen Verfahrens und
- Figur 4:: eine schematische Darstellung der Not-Energieversogung des erfindungsgemäßen Verfahrens mit einer Hybrid EMP.

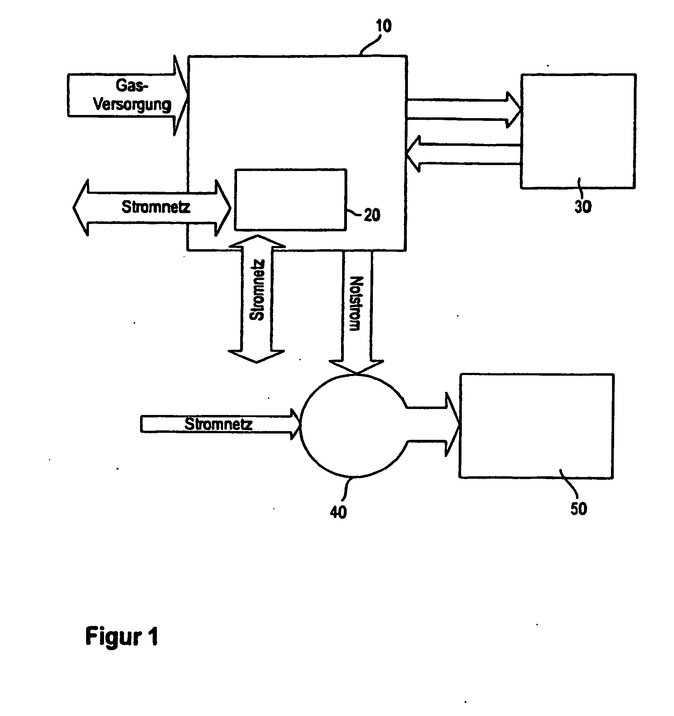

Figur 1 zeigt mit dem Bezugszeichen 10 ein Brennstoffzellensystem, das einerseits eine Brennstoffzelle und andererseits einen aktiven Energiespeicher 20 aufweist. Die in Figur 1 dargestellte Gasversorgung dient zum Betrieb der Brennstoffzelle. Das dargestellte Stromnetz dient dazu, den Energiespeicher 20 vor und während eines Fluges über die normale Bordnetzversorgung ("Stromnetz") aufzuladen bzw. im aufgeladenen Zustand zu halten. Wie dies aus Figur 1 weiter hervorgeht, kann der Energiespeicher 20 auch dazu herangezogen werden, Energie in das Stromnetz einzuspeisen, beispielsweise um einen erhöhten Energiebedarf abzufangen. Die Verbindung ist somit bidirektional.

Im Normalbetrieb des Flugzeuges dient der Energiespeicher 20 somit gleichsam als Puffer des Bord-Stromnetzes.

Mit dem Bezugszeichen 30 ist ein externer Wärmetauscher gekennzeichnet, der beispielsweise als Stauluftkanalwärmetauscher oder auch als Hautwärmetauscher ausgeführt sein kann und der unter anderem zur Temperierung der Brennstoffzellen dient.

Im Falle einer Störung oder des Ausfalls des Stromnetzes wird eine unterbrechungsfreie Stromversorgung dadurch gewährleistet, dass der Energiespeicher 20 die Stromversorgung übernimmt und zwar wenigstens solange, bis die Brennstoffzelle nach ihrer Startphase in einem Betriebszustand arbeitet, in dem sie die erforderliche Energieversorgung sicherstellen kann.

Die Verbindung zwischen Energiespeicher 20 und Notstromnetz ist ebenfalls bidirektional. Der Energiespeicher 20 kann auch für das Notstromnetz zur Netzdämpfung verwendet werden.

Im Rahmen der vorliegenden Erfindung kann eine Steuereinheit oder eine Schalteinheit Verwendung finden, die im Bedarfsfall die Brennstoffzelle mit den zu versorgenden Verbrauchern verbindet bzw. deren Energieversorgung durch den Energiespeicher und die Brennstoffzelle sicherstellt. Dabei ist die Steuereinheit oder die Schalteinheit vorzugsweise derart ausgeführt, dass eine unterbrechungsfreie Energieversorgung sichergestellt wird.

Aus Figur 1 geht weiter mit dem Bezugszeichen 40 ein redundanter Motorantrieb hervor, der aus zwei Elektromotoren besteht, die auf einer gemeinsamen Welle sitzen oder die über ein differentiales Getriebe die Pumpe 50 antreiben. Wie dies aus Figur 1 hervorgeht, wird einer der Elektromotoren über Notstrom gespeist, der von dem Energiespeicher 20 bzw. der Brennstoffzelle bereit gestellt wird und ein anderer Motor über das im Normalbetrieb des Luftfahrzeuges im Einsatz befindliche Bord-Stromnetz.

Die Doppelpfeile in Figur 1 kennzeichnen die bidirketionale Anbindung des Energiespeichers 20 an das jeweilige Stromnetz.

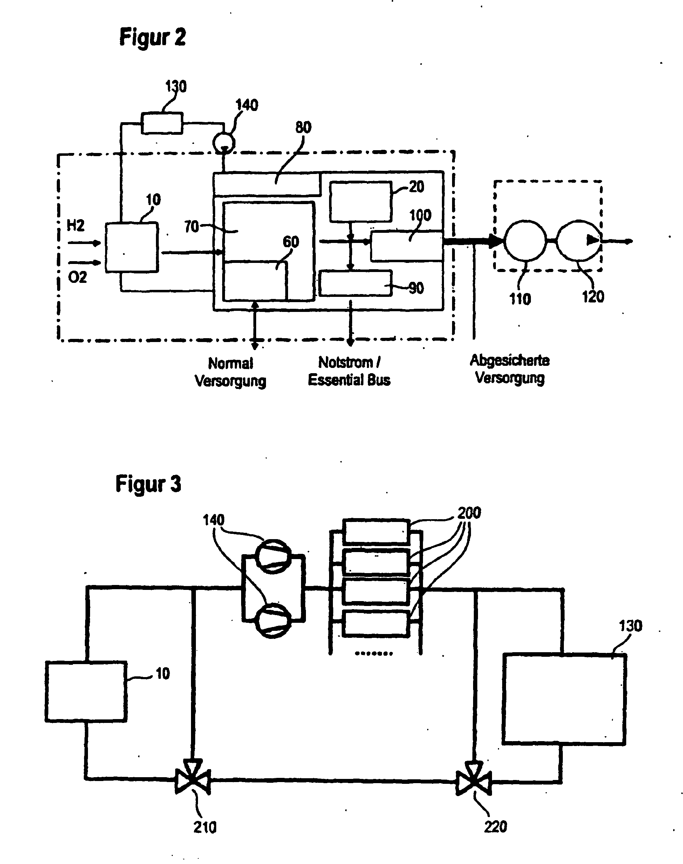

Figur 2 zeigt in einer detailliertere Darstellung das brennstoffzellenbasierte Notstromsystem für Luftfahrzeuge gemäß der vorliegenden Erfindung.

Wie dies aus Figur 2 im einzelnen hervorgeht, wird die Brennstoffzelle 10 mit Wasserstoff und Sauerstoff versorgt und liefert im Bedarfsfall Gleichstrom.

Mit dem Bezugszeichen 20 ist ein Energiespeicher dargestellt, der als Superkondensator ("supercapacitor") ausgeführt ist und der vor einer Flugmission über die normale Stromversorgung des Flugzeuges über einen Wandler 60, 70 aufgeladen wird. Der Wandler 60, 70 ist bidirektional, so dass die von dem Energiespeicher 20 bereitgestellte Energie auch in das normale Stromnetz eingespeist werden kann, etwa um das Stromnetz bei einem besonders hohen Leistungsbedarf zu unterstützen. Der Energiespeicher 20 stellt in diesem Fall einen Puffer für das normale Bord-Stromnetz des Flugzeuges dar.

Mit dem Bezugszeichen 70 ist ein beispielsweise als DC/DC-Wandler ausgeführter Wandler gekennzeichnet, der den von der Brennstoffzelle 10 bereitgestellten Gleichstrom in geeigneter Weise wandelt.

Das Bezugszeichen 80 kennzeichnet einen Multikonverter, in dem die Leistungselektronik-Komponenten der dargestellten Elemente der Not-Energieversorgung zusammengefaßt sind.

Der Umrichter 90 ist ebenfalls bidirektional ausgeführt und dient zur Bereitstellung der gewünschten Strom-/Spannungscharakteristik für die Notstromversorgung ("Notstrom/Essential Bus") von Verbrauchern, wie beispielsweise zur Versorgung von Instrumenten im Notbetrieb, und der Umrichter 100 dient zur Bereitstellung einer geeigneten Strom-/Spannungsversorgung für einen weiteren Verbraucher, der gemäß Fig. 2 durch den Motor 110 einer elektronischen Motorpumpe (EMP) 120 gebildet wird. Über den Wandler 90 kann der Energiespeicher auch für das Notstromnetz zur Netzdämpfung verwendet werden.

Bei dem Umrichtern 90, 100 handelt es sich vorzugsweise um Umrichter mit Hochsetzsteller.

Mit dem Bezugszeichen 130 ist ein Wärmetauscher und mit dem Bezugszeichen 140 eine Pumpe eines Kühlmittelkreislaufes dargestellt.

Im Normalbetrieb des Luftfahrzeuges wird der Energiespeicher 20 durch die normale Bord-Energieversorgung des Flugzeuges über den bidirektionalen Wandler 60 aufgeladen, so dass sich der Energiespeicher 20 bereits zu Beginn der Flugmission im geladenen, das heißt aktiven Zustand befindet.

Fällt die normale Energieversorgung aus oder ist diese gestört, wie dies beispielsweise dann der Fall ist, wenn die Bord-Netzspannung unter einen Grenzwert fällt, wird eine unterbrechungsfreie Stromversorgung dadurch bereitgestellt, dass der aktive Energiespeicher 20 den hier dargestellten Leistungsausgängen "Notstrom/essential bus" sowie den weiteren Verbrauchern ("primary flight control power") Strom bereitstellt, bis sich die Brennstoffzelle 10 nach Abschluß des Startvorgangs in ihrem Betriebszustand befindet. Sobald die Brennstoffzelle ihre Startphase abgeschlossen hat übernimmt diese die weitere Notstromversorgung.

Die Not-Energieversorgung der Ausgänge Notstrom/essential bus bzw. der weiteren Verbraucher, wie z.B. eines Elektromotors, erfolgt über die Umrichter 90, 100, die je nach Bedarf die gewünschte Spannungs-/Stromcharakteristik zur Verfügung stellen.

In Figur 2 ist ein Kühlsystem dargestellt, das zur Kühlung der Elektronikkomponenten des dargestellten Systems dient. Das vorzugsweise flüssige Kühlmittel wird aufgrund der Kühlung der Elektronikkomponenten erwärmt und durchströmt sodann den Brennstoffzellen-Stack 10, wodurch dieser auf einer geeigneten Temperatur gehalten werden kann. Als Wärmetauscher 130 des Kühlsystems kommen beispielsweise ein Hautwärmetauscher oder auch ein in einem Stauluftkanal integrierter Wärmetauscher in Betracht.

Figur 3 zeigt eine derartige Anordnung eines Kühlsystems, wobei mit dem Bezugszeichen 200 verschiedene zu kühlende Komponenten, wie beispielsweise Elektronikkomponenten oder auch andere Komponenten des Flugzeuges oder des Energieversorgungssystems dargestellt sind. Mit dem Bezugszeichen 140 sind zwei parallel angeordnete Pumpen dargestellt, die zur Förderung des Kühlmediums dienen.

Das Bezugszeichen 130 kennzeichnet den Wärmetauscher, der zur Kühlung des flüssigen Kühlmediums dient. Es kann sich - wie ausgeführt - z. B. um einen Hautwärmetauscher oder um einen in einem Stauluftkanal integrierten Wärmetauscher handeln.

Wie dies weiter aus Figur 3 hervorgeht, weist die Brennstoffzelle kein eigenes Kühlsystem auf, sondern ist an das genannte Kühlsystem der Komponenten 200 angeschlossen. Im Normalbetrieb kann beispielsweise durch ein nicht ganz dicht schließendes Ventil 210 gewährleistet werden, dass die durch die Kühlung der Komponenten 200 erwärmte Kühlflüssigkeit genutzt wird, um den Brennstoffzellen-Stack 10 auf einer bestimmten Temperatur zu halten. Dazu dient das in Figur 3 dargestellte Ventil 210. Das Ventil 220 dient dazu, den Anteil des Kühlmittelstroms zu steuern, der in dem Wärmetauscher 130 gekühlt werden soll.

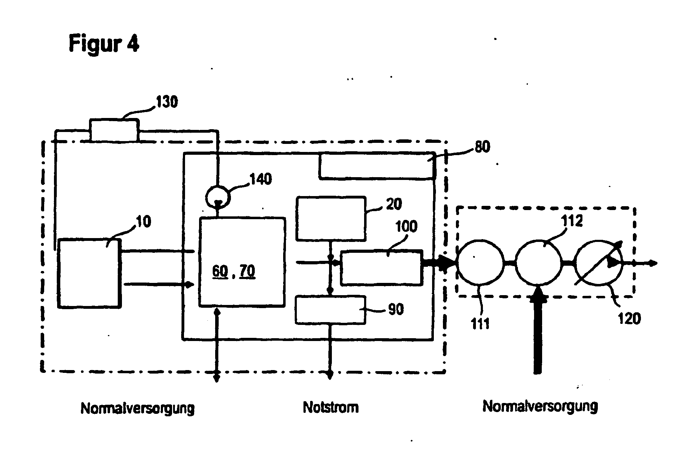

Figur 4 zeigt schließlich eine Architekturvariante des erfindungsgemäßen Energieversorgungssystems mit einer Hybrid EMP. Gleiche oder funktionsgleiche Komponenten sind mit denselben Bezugszeichen versehen wie in Figur 2. Wie dies aus Figur 4 hervorgeht, besteht die Antriebseinheit der Pumpe 120 aus zwei Elektromotoren 111, 112, von denen einer (111) über einen Umrichter 100 von dem Energiespeicher 20 bzw. der Brennstoffzelle 10 im Notbetrieb mit Energie versorgt wird, und wobei der andere der Motoren 112 über die Bord-Energieversorgung des Flugzeuges versorgt wird. Ein Vorteil dieser Anordnung besteht darin, dass die beiden Antriebsstränge weitgehend entkoppelt sind und dass beispielsweise unterschiedliche Motortypen verwendet werden können, so dass das Motordesign dissimilar ist, was Vorteile für die Fehlerbetrachtung mit sich bringt.

Mittels des erfindungsgemäßen Verfahrens kann eine unterbrechungsfreie Stromversorgung der Leistungsausgänge des Systems realisiert werden und es können somit übergeordnete Synergien auf Flugzeugebene erzielt werden (Gewichtsersparnisse durch Reduzierung oder Entfall der Batterien). Der erfindungsgemäße Energiespeicher wird als aktives Element betrieben.

Zur Erfüllung eines geeigneten Überwachungskonzeptes sowie der Zuverlässigkeitsanforderungen kann die Powerelektronik in einem BITE-Mode aktiv betrieben werden. Dies kann - wie ausgeführt - vorzugsweise dadurch realisiert werden, dass ein beispielsweise als DC/DC-Wandler ausgeführter Wandler betrieben wird und die notwendige Energie in einem Superkondensator abgespeichert wird. Beim Entladen des Superkondensators am Ende der Flug-Mission werden die ausgangsseitigen Leistungsmodule überwacht.

Der Einsatz eines vorzugsweise zusätzlichen bidirektionalen beispielsweise als DC/DC-Wandler ausgeführten Wandler erhöht weiter die Funktion des Systems, auch den normalen Stormversorgungstrakt mit Energie über den aktiven Energiespeicher bzw. Superkondensator zu puffern. Hierdurch können weitere Synergieeffekte auf Flugzeugebene erreicht werden.

Das beschriebene Konzept einer Hybrid EMP ist dissimilar im Ansatz und eliminiert das Problem der Verkopplung beider Stromversorgungspfade, was Sicherheitsvorteile mit sich bringt.

## Patentansprüche

1. Verfahren zur Energieversorgung eines Luftfahrzeuges mit einer normalen Energieversorgung, einer Not-Energieversorgung, die wenigstens eine Brennstoffzelle (10) aufweist, und mit einem oder mehreren Verbrauchern, der oder die im Normalbetrieb durch die normale Energieversorgung versorgt werden wobei der oder die Verbraucher im Notbetrieb nach einem Ausfall oder bei einer Störung der normalen Energieversorgung des Luftfahrzeuges unmittelbar oder mittelbar von der Brennstoffzelle (10) mit Energie versorgt werden, sowie mit wenigstens einem aktiven Energiespeicher (20), welcher den oder die Verbraucher im Notbetrieb wenigstens zeitweise mit Energie versorgt, wobei im Falle einer Störung oder des Ausfalls der normalen Energieversorgung des Luftfahrzeuges eine unterbrechungsfreie Stromversorgung **dadurch** gewährleistet wird, dass der Energiespeicher (20) zumindest solange Energie zur Verfügung stellt, bis die Brennstoffzelle (10) ihre Startphase abgeschlossen hat und zur Energieversorgung zur Verfügung steht.

2. Verfahren nach Anspruch 1, **dadurch gekennzeichnet, dass** ein dem Energiespeicher (20) vorgeschalteter Wandler (60, 70), vorzugsweise ein bidirektionaler Wandler vorgesehen ist, der mit der normalen Energieversorgung des Flugzeuges in Verbindung steht und über den der Energiespelcher (20) im Normalbetrieb des Flugzeuges vor und/oder während eines Fluges geladen wird.

3. Verfahren nach Anspruch 1 oder 2, **dadurch gekennzeichnet, dass** ein Wandler (60, 70), vorzugsweise ein bidirektionaler Wandler, vorgesehen Ist, der derart ausgeführt ist, dass dieser einen Energiefluß von dem Energiespeicher (20) oder einer sonstigen Energiequelle zu der normalen Energieversorgung des Flugzeuges ermöglicht.

4. Verfahren nach einem der vorhergehenden Ansprüche, **dadurch gekennzeichnet, dass** ein Wandler (90, 100), vorzugsweise ein bidirektionaler Wandler vorgesehen ist, der derart ausgeführt ist, dass dieser einen Energiefluß von dem Energiespeicher (20) oder einer sonstigen Energiequelle zu der Notstromversorgung des Flugzeuges und/oder von der Notstromversorgung des Flugzeuges zum Energiespeicher (20) oder einer sonstigen Energiequelle ermöglicht.

5. Verfahren nach einem der vorhergehenden Ansprüche, **dadurch gekennzeichnet, dass** es sich bei dem Energiespeicher um einen Superkondensator handelt.

6. Verfahren nach einem der vorhergehenden Ansprüche, **dadurch gekennzeichnet, dass** die Not-Energieversorgung des Weiteren einen Multikonverter (80) umfaßt, der Leistungselektronik-Komponenten der Not-Energieversorgung enthält.

7. Verfahren nach Anspruch 6, **dadurch gekennzeichnet, dass** die Leistungselektronik-Komponenten als austauschbare Module oder als integrierte Baugruppen ausgeführt sind.

8. Verfahren nach einem der vorhergehenden Ansprüche, **dadurch gekennzeichnet, dass** wenigstens eine elektrische Motorpumpe (50; 120) zur Hydraulikversorgung sowie eine Antriebseinheit (40) zum Antrieb der Motorpumpe (50; 120) vorgesehen ist, wobei die Antriebseinheit (40) wenigstens zwei Elektromotoren (111; 112) umfaßt, die mit unterschiedlichen Energiequellen in Verbindung stehen oder verbindbar sind.

9. Verfahren nach Anspruch 8, **dadurch gekennzeichnet, dass** die wenigstens zwei Elektromotoren (111;112) die Pumpe (50;120) über eine gemeinsame Motorwelle oder über ein differentiales Getriebe antreiben.

10. Verfahren nach Anspruch 8 oder 9, **dadurch gekennzeichnet, dass** wenigstens einer der Elektromotoren (111;112) derart ausgeführt ist, dass er im Normalbetrieb des Luftfahrzeuges von der normalen Energieversorgung des Luftfahrzeuges mit Energie versorgt wird.

11. Verfahren nach einem der Ansprüche 8 bis 10, **dadurch gekennzeichnet, dass** wenigstens einer der Elektromotoren (111;112) derart ausgeführt ist, dass er im Notbetrieb des Luftfahrzeuges von der Brennstoffzelle (10) bzw. dem aktiven Energiespeicher (20) mit Energie versorgt wird.

12. Verfahren nach einem der Ansprüche 8 bis 11, **dadurch gekennzeichnet, dass** die Antriebseinheit (40) der Pumpe (50;120) wenigstens zwei Elektromotoren (111;112) unterschiedlichen Typs aufweist.

13. Verfahren nach einem der vorhergehenden Ansprüche, **dadurch gekennzeichnet, dass** eine Steuereinrichtung vorgesehen ist, die den Energiespeicher (20) derart ansteuert, dass dieser wenigstens solange Energie liefert, bis die Brennstoffzelle (10) zur Energieversorgung zur Verfügung steht.

14. Verfahren nach einem der vorhergehenden Ansprüche, wobei ein Kühlsystem zur Kühlung von Komponenten des Flugzeuges bzw. des Energieversorgungssystems vorgesehen ist und die Brennstoffzelle (10) zum Zwecke der Einstellung einer geeigneten Betriebstemperatur der Brennstoffzelle (10) mit diesem Kühlsystem in Verbindung steht.

15. Verfahren nach Anspruch 14, **dadurch gekennzeichnet, dass** es sich bei dem Kühlsystem um ein Kühlsystem zur Kühlung von Elektronikkomponenten (200) handelt.

16. Verfahren nach Anspruch 14 oder 15, **dadurch gekennzeichnet, dass** das Kühlsystem wenigstens einen Wärmetauscher (130) aufweist, bei dem es sich um einen Stauluftkanatwärmetauscher oder um einen Hautwärmetauscher handelt.

## Claims

1. Method for supplying energy to an aircraft with a normal energy supply and an emergency energy supply which has at least one fuel cell (10), and with one or more devices which during normal operation is or are supplied by the normal energy supply, the device or devices being supplied with energy during emergency operation directly or indirectly from the fuel cell (10) after failure of, or in the event of a disruption to, the normal energy supply of the aircraft, and with at least one active energy store (20) which during emergency operation supplies the device or devices with energy at least temporarily, wherein an uninterrupted supply of power is ensured in the event of a disruption to, or the failure of, the normal energy supply of the aircraft by the energy store (20) making energy available at least until the fuel cell (10) has completed its start-up phase and is available for energy supply.

2. Method according to Claim 1, **characterized in that** a convertor (60, 70) connected upstream from the energy store (20), preferably a bidirectional convertor, is provided which is connected to the normal energy supply of the aircraft and via which during normal operation of the aircraft the energy store (20) is loaded before and/or during a flight.

3. Method according to Claim 1 or 2, **characterized in that** a convertor (60, 70), preferably a bidirectional convertor, is provided which is designed in such a way that the converter permits a flow of energy from the energy store (20) or another energy source to the normal energy supply of the aircraft.

4. Method according to one of the preceding claims, **characterized in that** a convertor (90, 100), preferably a bidirectional convertor, is provided which is designed in such a way that the converter permits a flow of energy from the energy store (20) or another energy source to the emergency power supply of the aircraft and/or from the emergency power supply of the aircraft to the energy store (20) or another energy source.

5. Method according to one of the preceding claims, **characterized in that** the energy store is a supercapacitor.

6. Method according to one of the preceding claims, **characterized in that** the emergency energy supply moreover comprises a multiconvertor (80) which contains power electronics components of the emergency energy supply.

7. Method according to Claim 6, **characterized in that** the power electronics components are designed as exchangeable modules or as integrated assemblies.

8. Method according to one of the preceding claims, **characterized in that** at least one electric motor pump (50, 120) for hydraulic supply and one drive unit (40) for driving the motor pump (50, 120) are provided, the drive unit (40) comprising at least two electromotors (111, 112) which are or can be connected to different energy sources.

9. Method according to Claim 8, **characterized in that** the at least two electromotors (111, 112) drive the pump (50, 120) via a common driveshaft or via a differential gear.

10. Method according to Claim 8 or 9, **characterized in that** at least one of the electromotors (111, 112) is designed in such a way that, during normal operation of the aircraft, it is supplied with energy from the normal energy supply of the aircraft.

11. Method according to one of Claims 8 to 10, **characterized in that** at least one of the electromotors (111, 112) is designed in such a way that, during emergency operation of the aircraft, it is supplied with energy from the fuel cell (10) or the active energy store (20).

12. Method according to one of Claims 8 to 11, **characterized in that** the drive unit (40) of the pump (50, 120) has at least two electromotors (111, 112) of different types.

13. Method according to one of the preceding claims, **characterized in that** a control device is provided which controls the energy store (20) in such a way that the latter delivers energy at least until the fuel cell (10) is available for energy supply.

14. Method according to one of the preceding claims, wherein a cooling system is provided for cooling components of the aircraft or of the energy supply system, and the fuel cell (10) is connected to this cooling system in order to set a suitable operating temperature of the fuel cell (10).

15. Method according to Claim 14, **characterized in that** the cooling system is a cooling system for cooling electronic components (200).

16. Method according to Claim 14 or 15, **characterized in that** the cooling system has at least one heat exchanger (130) which is a ram air duct heat exchanger or a skin heat exchanger.

## Revendications

1. Procédé pour alimenter en énergie un aéronef avec une alimentation en énergie normale, une alimentation en énergie de secours, qui présente au moins une cellule de combustible (10), et avec un ou plusieurs consommateurs, lequel ou lesquels sont alimentés en mode normal par l'alimentation en énergie normale, le ou les consommateurs étant alimentés en énergie directement ou indirectement par la cellule de combustible (10) en mode de secours après une défaillance ou dans le cas d'un incident de l'alimentation en énergie normale de l'aéronef, et avec au moins un accumulateur d'énergie (20) actif, lequel alimente le ou les consommateurs en mode de secours au moins partiellement en énergie, une alimentation en énergie continue étant garantie dans le cas d'un incident ou de la défaillance de l'alimentation en énergie normale de l'aéronef par le fait que l'accumulateur d'énergie (20) met de l'énergie à disposition jusqu'à ce que la cellule de combustible (10) ait terminé sa phase de démarrage et soit disponible pour l'alimentation en énergie.

2. Procédé selon la revendication 1, **caractérisé en ce qu'**un convertisseur (60, 70) placé en amont de l'accumulateur d'énergie (20), de préférence un convertisseur bidirectionnel, est prévu, lequel est en liaison avec l'alimentation en énergie normale de l'avion et par lequel l'accumulateur d'énergie (20) est chargé en mode normal de l'avion avant et/ou pendant un vol.

3. Procédé selon la revendication 1 ou 2, **caractérisé en ce qu'**un convertisseur (60, 70), de préférence un convertisseur bidirectionnel, est prévu, lequel est réalisé de telle sorte que celui-ci permet un flux d'énergie partant de l'accumulateur d'énergie (20) ou d'une autre source d'énergie pour l'alimentation en énergie normale de l'avion.

4. Procédé selon l'une quelconque des revendications précédentes, **caractérisé en ce qu'**un convertisseur (90, 100), de préférence un convertisseur bidirectionnel, est prévu, lequel est réalisé de telle sorte que celui-ci permet un flux d'énergie allant de l'accumulateur d'énergie (20) ou d'une autre source d'énergie à l'alimentation en courant de secours de l'avion et/ou de l'alimentation en courant de secours de l'avion à l'accumulateur d'énergie (20) ou une autre source d'énergie.

5. Procédé selon l'une quelconque des revendications précédentes, **caractérisé en ce que**, en ce qui concerne l'accumulateur d'énergie, il s'agit d'un supercondensateur.

6. Procédé selon l'une quelconque des revendications précédentes, **caractérisé en ce que** l'alimentation en énergie de secours comprend également un multiconvertisseur (80), qui contient des composants d'électronique de puissance de l'alimentation en énergie de secours.

7. Procédé selon la revendication 6, **caractérisé en ce que** les composants d'électronique de puissance sont réalisés sous forme de modules interchangeables ou sous forme d'ensembles intégrés.

8. Procédé selon l'une quelconque des revendications précédentes, **caractérisé en ce qu'**au moins une motopompe (50; 120) électrique est prévue pour l'alimentation hydraulique et une unité d'entraînement (40) pour l'entraînement de la motopompe (50; 120), l'unité d'entraînement (40) comprenant au moins deux moteurs électriques (111; 112), qui sont en liaison ou peuvent être reliés à différentes sources d'énergie.

9. Procédé selon la revendication 8, **caractérisé en ce que** les au moins deux moteurs électriques (111; 112) entraînent la pompe (50; 120) par l'intermédiaire d'un arbre moteur commun ou par l'intermédiaire d'un engrenage différentiel.

10. Procédé selon la revendication 8 ou 9, **caractérisé en ce qu'**au moins l'un des moteurs électriques (111; 112) est conçu de telle sorte qu'il est alimenté en énergie, lorsque l'aéronef est en mode normal, à partir de l'alimentation en énergie normale de l'aéronef.

11. Procédé selon l'une quelconque des revendications 8 à 10, **caractérisé en ce qu'**au moins l'un des moteurs électriques (111; 112) est conçu de telle sorte qu'il est alimenté en énergie, lorsque l'aéronef est en mode de secours, par la cellule de combustible (10) ou l'accumulateur d'énergie (20) actif.

12. Procédé selon l'une quelconque des revendications 8 à 11, **caractérisé en ce que** l'unité d'entraînement (40) de la pompe (50; 120) présente au moins deux moteurs électriques (111; 112) de type différent.

13. Procédé selon l'une quelconque des revendications précédentes, **caractérisé en ce qu'**un dispositif de commande est prévu, lequel actionne l'accumulateur d'énergie (20), de telle sorte que celui-ci fournit de l'énergie au moins jusqu'à ce que la cellule de combustible (10) soit disponible pour l'alimentation en énergie.

14. Procédé selon l'une quelconque des revendications précédentes, un système de refroidissement étant prévu pour le refroidissement de composants de l'avion ou du système d'alimentation en énergie et en ce que la cellule de combustible (10) est en liaison avec ce système de refroidissement pour le réglage d'une température de service appropriée de la cellule de combustible (10).

15. Procédé selon la revendication 14, **caractérisé en ce que**, en ce qui concerne le système de refroidissement, il s'agit d' un système de refroidissement pour le refroidissement de composants d'électronique (200).

16. Procédé selon la revendication 14 ou 15, **caractérisé en ce que** le système de refroidissement présente au moins un échangeur de chaleur (130), pour lequel il s'agit d'un échangeur de chaleur à canal d'air de retenue ou d'un échangeur de chaleur à pellicule.
